# EUROPÄISCHE PATENTSCHRIFT

(11) **EP 2 504 146 B1**
(45) Veröffentlichungstag und Bekanntmachung des Hinweises auf die Patenterteilung: **11.01.2017**
(21) Anmeldenummer: 10781624.1
(22) Anmeldetag: 24.11.2010
(51) Int. Cl.: B29C 47/00, B29C 47/04, B32B 37/15, B32B 37/22

(54) **VERFAHREN ZUR HERSTELLUNG EINES FOLIENVERBUNDWERKSTOFFS UND EINES KARTENKÖRPERS**
METHOD FOR PRODUCING A FILM COMPOSITE MATERIAL AND A CARD BODY
PROCÉDÉ DE FABRICATION D'UN MATÉRIAU COMPOSITE EN FEUILLE ET D'UN CORPS DE CARTE

(30) Priorität: 24.11.2009 DE 102009054338
(43) Veröffentlichungstag der Anmeldung: 03.10.2012
(73) Patentinhaber: Giesecke & Devrient GmbH, 81677 München (DE)
(72) Erfinder: RIEDL, Josef, 85395 Attenkirchen (DE); BRAUN, Andreas, 80798 München (DE)
(86) Internationale Anmeldenummer: PCT/EP2010/007135
(87) Internationale Veröffentlichungsnummer: WO 2011/063949

(56) Entgegenhaltungen:
- EP-A2- 0 430 282
- EP-A2- 0 987 102
- WO-A1-2007/118828
- US-A- 4 567 090

## Beschreibung

Die Erfindung betrifft ein Verfahren zur Herstellung eines Folienverbundwerkstoffs, insbesondere zur Verwendung als Schicht in einem Kartenkörper, vorzugsweise in einem Kartenkörper eines tragbaren Datenträgers, sowie ein entsprechendes Verfahren zur Herstellung des Kartenkörpers.

Bei der Fertigung von Kartenkörpern, insbesondere für tragbare Datenträger, wie z.B. Chipkarten, werden mehrere übereinander liegende Kunststofffolien miteinander laminiert, um hierdurch einen stabilen und bruchfesten Kartenkörper zu schaffen. Zur Verbesserung der mechanischen Eigenschaften solcher Kartenkörper ist es vorteilhaft, im Rahmen des Laminierprozesses Folien aus thermoplastischem Elastomer, insbesondere basierend auf Urethanbasis, einzusetzen. Diese Folien sind außerordentlich elastisch und können die Bruchfestigkeit des Kartenaufbaus deutlich verbessern. In der Druckschrift EP 0 430 282 A2 ist ein Kartenkörper in der Form einer mehrschichtigen Ausweiskarte beschrieben, bei der zwischen dem Kartenkern und entsprechenden Deckfolien jeweils eine Schicht aus thermoplastischem Elastomer vorgesehen ist.

Die Verarbeitung von Folien aus thermoplastischem Elastomer im Rahmen eines Laminierprozesses bei der Herstellung eines Kartenkörpers erweist sich als sehr schwierig. Aufgrund ihrer hohen Elastizität sind die Folien sehr lappig. Ferner besitzen solche Folien einen niedrigen Glaspunkt im Raumtemperaturbereich, wodurch sie haftende Eigenschaften aufweisen. Dies führt beim Stapeln der Folien zu Verblockungen, so dass die Folien im Stapel nur schwer vereinzelt und transportiert werden können. Um beim Laminieren solcher Folien mit anderen Materialien eine ausreichende Verbindungssteifigkeit zu erreichen, ist es zudem erforderlich, den Glaspunkt des jeweils anderen Materials zu erreichen. Da dieser Glaspunkt regelmäßig über dem Schmelzpunkt von thermoplastischen Elastomeren liegt, führt dies häufig zum Ausschwimmen des thermoplastischen Elastomers. Dies hat zur Folge, dass die verwendeten Laminiermaschinen oft gereinigt werden müssen. Unter Umständen können sogar die an dem thermoplastischen Elastomer anliegenden Folien ebenfalls zu fließen beginnen und somit den darauf befindlichen Layout-Druck deformieren. Zwar besteht die Möglichkeit, bei niedrigeren Temperaturen zu laminieren, um hierdurch das Ausschwimmen der Folien zu vermeiden. In diesem Fall wird jedoch in der Regel kein ausreichend guter Laminatverbund erreicht.

In dem Dokument EP 0 384 252 B1 ist ein Folienverbundwerkstoff aus einer Vielzahl von Schichten gezeigt, wobei eine mittlere Schicht aus thermoplastischem Elastomer gebildet ist. An diese Schicht schließen sich Schichten aus thermoplastischen Kunststoffen an. Bei der Herstellung des Verbundwerkstoffs werden auf eine Folie, welche die mittlere Schicht bildet, die weiteren Schichten aufgebracht, beispielsweise durch Coextrudieren.

Aus der DE 100 57 231 A1 ist ein Aufbau mehrschichtiger laminierter Kartenkörper unter Verwendung von Coextrusionsverbundfolien bekannt. Die Coextrusionsverbundfolien können so ausgeführt sein, daß eine elastische, aus einem thermoplastischen Elastomer (TPE) gebildete Schicht zwischen zwei Schichten aus wärmeformbeständigem Material angeordnet ist. Die Schrift deutet allgemein an, daß bei der Coextrusion grundsätzlich Materialien mit unterschiedlichen Erweichungstemperaturen und Viskositäten verbunden werden können, wobei das Verhältnis der Viskositäten zweier Materialien über drei liegen kann. Genauere Angaben zu Materialkombinationen macht die Schrift nicht.

Aus der US 4567090 A ist ein hitzebeständiger Laminierfilm bekannt, der ein Gasbarriere aufweist. Der Film beinhaltet eine Schichtfolge von Zwischenschichten in Form modifizierter Polyolifine, die an eine Zentralschicht aus Polypropylen grenzen. Die Zentralschicht bildet die Gasbarriere. Eine der Zwischenschichten kann aus thermoplastischem Polyurethan (TPU) ausgeführt sein. Das TPU wirkt dabei als Klebstoff für die angrenzenden Schichten, vor allem zu der Zentralschicht aus Polypropylen.

Aufgabe der Erfindung ist es, einen Folienverbundwerkstoff herzustellen, in dem Materialien mit deutlich voneinander abweichende Materialeigenschaften vereint werden, der im Rahmen der Fertigung eines Kartenkörpers gut verarbeitet werden kann und der zu einer Verbesserung der mechanischen Eigenschaften eines damit hergestellten Kartenkörpers führt.

Diese Aufgabe wird durch das Verfahren gemäß Anspruch 1 bzw. Anspruch 6 bzw. durch den entsprechend hergestellten Kartenkörper gelöst. Weiterbildungen der Erfindung sind in den abhängigen Ansprüchen definiert.

In dem erfindungsgemäßen Verfahren zur Herstellung eines Folienverbundwerkstoffs wird in einem Coextrusionsprozess zumindest eine erste Kunststoffschmelze aus Kunststoff umfassend thermoplastisches Elastomer und zumindest eine zweite Kunststoffschmelze aus Kunststoff ohne thermoplastisches Elastomer derart zusammengeführt, dass ein Folienverbundwerkstoff gebildet wird. Dieser Verbundwerkstoff beinhaltet eine oder mehrere äußere erste Schichten aus Kunststoff ohne thermoplastisches Elastomer, eine oder mehrere mittlere zweite Schichten aus Kunststoff umfassend thermoplastisches Elastomer und eine oder mehrere äußere dritte Schichten wiederum aus Kunststoff ohne thermoplastisches Elastomer. Als Kunststoff für die mittlere bzw. die mittleren zweiten Schichten wird dabei ein thermoplastisches Elastomer auf Urethanbasis eingesetzt. Dieser Kunststoff steht dabei stellvertretend für ein thermoplastisches Elastomer, das sich hinsichtlich Erweichungstemperatur und Viskosität deutlich von dem zweiten Kunststoff der ersten und dritten Schichten unterscheidet. Als Materialien für die ersten bzw. dritten Schichten werden Polycarbonat oder Copolyester verwendet, insbesondere Polyethylenterephthalat-Copolyester, oder eine Mischung von Polycarbonat mit einem oder mehreren anderen Polyestern. Die genannten Materialien gewährleisten eine gute Steifigkeit und gute Laminierfähigkeit des Folienverbundwerkstoffs.

Erfindungsgemäß wird in einem einfachen Herstellungsprozess ein Folienverbundwerkstoff geschaffen, der im Rahmen einer späteren Verarbeitung zur Herstellung eines Kartenkörpers gut handhabbar ist. Dies wird dadurch erreicht, dass eine oder mehrere mittleren Schichten, welche thermoelastisches Elastomer umfassen, mit einer oder mehreren äußeren Schichten aus Kunststoff beschichtet werden, der keine Bestandteile von thermoplastischem Elastomer aufweist und somit steifer als die mittlere bzw. die mittleren Schichten ist. Durch Verwendung geeigneter Materialien für die äußeren Schichten kann insbesondere eine gute Laminierfähigkeit auch bei höheren Temperaturen sowie nicht blockende Eigenschaften für den Verbundwerkstoff erreicht werden. Durch die Verwendung eines Coextrusionsprozesses, bei dem im Unterschied zur oben genannten Druckschrift EP 0 384 252 B1 alle Kunststoffe im geschmolzenen Zustand vor Verlassen der entsprechenden Breitschlitzdüse des Extruders zusammengeführt werden, wird eine einfache und effiziente Herstellung des Verbundwerkstoffs erreicht.

In einer besonders bevorzugten Ausführungsform des erfindungsgemäßen Verfahrens werden als Kunststoffe für die zumindest eine zweite Kunststoffschmelze Polymer-Materialien und insbesondere Thermoplaste verwendet, vorzugsweise Polyester oder eine Mischung von Polyestern. Das heißt, in dem gebildeten Folienverbundwerkstoff umfassen die ersten bzw. dritten Schichten das entsprechende Polymer- bzw. Thermoplast-Material.

Als Kunststoff für die mittlere bzw. die mittleren zweiten Schichten wird grundsätzlich ein thermoplastisches Elastomer auf Urethanbasis eingesetzt. Je nach Anwendungsfall kann dabei für die mittleren Schichten ein reines thermoplastisches Elastomer bzw. gegebenenfalls auch eine Mischung aus thermoplastischem Elastomer und anderen Kunststoffmaterialien verwendet werden. Beispielsweise können die eine oder mehreren zweiten Schichten Polyethylenterephthalat-Copolyester mit einem Anteil an thermoplastischem Elastomer auf Polyurethanbasis umfassen, insbesondere mit einem Anteil von 15% bis 35% oder von 50% bis 75%. Vorzugsweise wird dabei als eine zentrale zweite Schicht ein Polyethylenterephthalat-Copolyester mit einem Anteil von 50% bis 75% an thermoplastischem Elastomer verwendet, wobei sich an beide Seiten der zentralen Schicht jeweils eine zweite Schicht aus Polyethylenterephthalat-Copolyester mit einem Anteil von 15% bis 35% an thermoplastischem Elastomer anschließt. Gegebenenfalls besteht auch die Möglichkeit, dass eine zentrale zweite Schicht aus reinem thermoplastischen Elastomer vorliegt, an welche sich auf beiden Seiten jeweils eine Schicht aus Extrusionskleber anschließt, der zum Verbinden mit den jeweiligen äußeren ersten bzw. dritten Schichten dient.

In einer weiteren Ausführungsform des erfindungsgemäßen Verfahrens können die einen oder mehreren ersten und/ oder zweiten und/ oder dritten Schichten transparent und/ oder eingefärbt sein. In einer bevorzugten Variante sind die einen oder mehreren zweiten Schichten UV-stabilisiert bzw. von sich aus UV-stabil, wobei die eine oder mehreren zweiten Schichten vorzugsweise aliphatische Typen von thermoplastischem Elastomer auf Urethanbasis sind. Diese Typen sind UV-stabiler als aromatische Typen. In einer weiteren Variante wird als Material für die eine oder mehreren zweiten Schichten vorzugsweise thermoelastisches Elastomer auf Urethanbasis mit einer Reißdehnung nach DIN 53504 von mindestens 300% verwendet. Kartenkörper mit einem Folienverbundwerkstoff aus den oben genannten Materialien weisen besonders gute Eigenschaften im Hinblick auf Stabilität und Bruchfestigkeit auf.

In einer weiteren Variante des erfindungsgemäßen Verfahrens wird ein Folienverbundwerkstoff gebildet, dessen eine oder mehrere zweite Schichten eine Shore A-Härte von 90 oder größer und eine Shore D-Härte von 50 oder größer oder dessen eine oder mehrere zweite Schichten eine Shore A-Härte von 95 oder kleiner und eine Shore D-Härte von 50 und kleiner aufweisen. Wird als Material für die einen oder mehreren ersten und dritten Schichten Polyethylenterephthalat-Copolyester verwendet, wird als thermoplastisches Elastomer der einen oder mehreren zweiten Schichten vorzugsweise ein Material mit einer Shore A-Härte von 50 bis 95 und einer Shore D-Härte von 35 bis 50 verwendet. Wird für die eine oder die mehreren ersten und dritten Schichten Polycarbonat verwendet, umfassen die einen oder mehreren zweiten Schichten vorzugsweise ein Material mit einer Shore A-Härte von 90 bis 98 und einer Shore D-Härte von 50 bis 70.

Bei der Herstellung des Folienverbundwerkstoffs hat es sich insbesondere als vorteilhaft erwiesen, dass Coextrusionsverfahren bei einer Massetemperatur von 200 °C oder höher, insbesondere bei 230 °C oder höher, durchzuführen.

In einer weiteren Ausführungsform wird mit dem Herstellungsverfahren ein Folienverbundwerkstoff gebildet, dessen eine oder mehrere zweite Schichten eine Gesamtdicke zwischen 20 µm und 100 µm, insbesondere zwischen 30 µm und 60 µm, aufweisen, wobei die Gesamtdicke des Folienverbundwerkstoffs vorzugsweise zwischen 50 µm und 350 µm, insbesondere zwischen 100 µm und 300 µm, liegt. Diese Dicken gewährleisten eine ausreichende Stabilität des Folienverbundwerkstoffs bei dessen Verarbeitung und führen ferner zu guten Materialeigenschaften eines Kartenkörpers, der diesen Folienverbundwerkstoff enthält.

Neben dem oben beschriebenen Verfahren umfasst die Erfindung ferner einen Folienverbundwerkstoff, welcher mit diesem Verfahren hergestellt ist.

Die Erfindung betrifft ferner ein Verfahren zur Herstellung eines Kartenkörpers, insbesondere für einen tragbaren Datenträger, bei dem ein Folienverbundwerkstoff mit dem oben beschriebenen erfindungsgemäßen Verfahren hergestellt wird bzw. ein solcher Folienverbundwerkstoff bereitgestellt wird und bei dem eine Vielzahl von Schichten aus Kunststoff umfassend zumindest eine Schicht aus dem Folienverbundwerkstoff miteinander laminiert werden. Ein guter Laminatverbund wird dabei durch ein Laminieren bei einer Temperatur von zwischen 120 °C und 200 °C erreicht, insbesondere zwischen 125 °C und 190 °C, vorzugsweise zwischen 130 °C und 180 °C, besonders bevorzugt zwischen 130 °C und 140 °C oder zwischen 175 °C und 185 °C. Der Druck beim Laminieren liegt vorzugsweise zwischen 10 bar und 60 bar, beispielsweise bei 50 bar. Bei Verwendung eines Folienverbundwerkstoffs mit äußeren Schichten aus Polyethylenterephthalat-Copolyester wird vorzugsweise bei Temperaturen zwischen 130 °C und 140 °C mit einem Druck von 50 bar laminiert. Bei Verwendung eines Folienverbundwerkstoffs mit äußeren Schichten aus Polycarbonat wird vorzugsweise bei Temperaturen zwischen 175 °C und 180 °C mit einem Druck von 50 bar laminiert.

Vorzugsweise wird das Laminieren in einer Heizstation und einer Kühlstation durchgeführt, wobei der Druck in der Heizstation insbesondere zwischen 10 bar und 40 bar (100 N/cm² bis 400 N/cm²), bevorzugt zwischen 12,5 bar und 35 bar (125 N/cm² bis 350 N/cm²) liegt. Demgegenüber liegt der Druck in der Kühlstation vorzugsweise zwischen 20 bar und 70 bar (200 N/cm² bis 700 N/cm²), besonders bevorzugt zwischen 25 bar und 60 bar (250 N/cm² bis 600 N/cm²). Die Laminierzeit liegt in der Heiz- und/oder Kühlstation vorzugsweise jeweils zwischen 13 min und 25 min.

In einer besonders bevorzugten Ausführungsform des Herstellungsverfahrens des Kartenkörpers bestehen beim Laminieren der Schichten zumindest eine der Deckschichten und insbesondere beide Deckschichten aus dem Folienverbundwerkstoff. Diese Variante hat den Vorteil, dass bei der Verwendung des erfindungsgemäßen Folienverbundwerkstoffs der grundsätzliche Aufbau des Kartenkörpers nicht verändert werden muss, sondern lediglich die Overlay-Folien durch den Verbundwerkstoff ersetzt werden müssen.

In einer weiteren bevorzugten Variante des Herstellungsverfahrens bestehen die eine oder mehreren äußeren ersten und/oder dritten Schichten des Folienverbundwerkstoffs aus dem gleichen Material wie diejenige Schicht, welche sich beim Laminieren des Kartenkörpers mit einer der äußeren ersten und/oder dritten Schichten verbindet. Hierdurch wird ein sehr gutes Verschmelzen des Folienverbundwerkstoffs mit dem restlichen Schichtaufbau des Kartenkörpers erreicht.

Neben dem soeben beschriebenen Herstellungsverfahren umfasst die Erfindung ferner einen Kartenkörper, insbesondere für tragbare Datenträger, umfassend eine Vielzahl von übereinander laminierten Schichten, wobei der Kartenkörper mit diesen Herstellungsverfahren hergestellt ist.

Ausführungsbeispiele der Erfindung werden nachfolgend anhand der beigefügten Figuren detailliert beschrieben.

Es zeigen:
- Fig.1: den Schichtaufbau eines Folienverbundwerkstoffs, der mit einer ersten Variante des erfindungsgemäßen Verfahrens erhalten wurde;
- Fig. 2: den Schichtaufbau eines Folienverbundwerkstoffs, der mit einer zweiten Variante des erfindungsgemäßen Verfahrens erhalten wurde;
- Fig. 3: den Schichtaufbau eines Folienverbundwerkstoffs, der mit einer dritten Variante des erfindungsgemäßen Verfahrens erhalten wurde;
- Fig. 4: den Schichtaufbau eines Folienverbundwerkstoffs, der mit einer vierten Variante des erfindungsgemäßen Verfahrens erhalten wurde;
- Fig. 5: den Schichtaufbau eines Kartenkörpers, umfassend Schichten aus einem mit dem erfindungsgemäßen Verfahren hergestellten Folienverbundwerkstoff; und
- Fig. 6: eine besonders bevorzugte Variante eines erfindungsgemäßen Schichtaufbaus eines Kartenkörpers.

Alle im Folgenden beschriebenen Ausführungsformen von Folienverbundwerkstoffen zeichnen sich dadurch aus, dass sie in einem Coextrusionsverfahren hergestellt werden, bei dem die einzelnen Kunststoffschmelzen vor dem Austritt der bei der Extrusion verwendeten Breitschlitzdüse zusammengeführt werden. Dabei werden in dem Coextrusionsprozess eine oder mehrere Schmelzen aus Material umfassend thermoplastisches Elastomer (im Folgenden auch mit der gängigen Abkürzung TPE bezeichnet) mit einer oder mehreren Schmelzen aus steiferem Kunststoffmaterial ohne TPE derart verbunden, dass ein Verbundwerkstoff aus einer oder mehreren mittleren Schichten umfassend TPE und einer oder mehreren daran anschließenden äußeren Schichten aus steiferem Material ohne TPE entsteht.

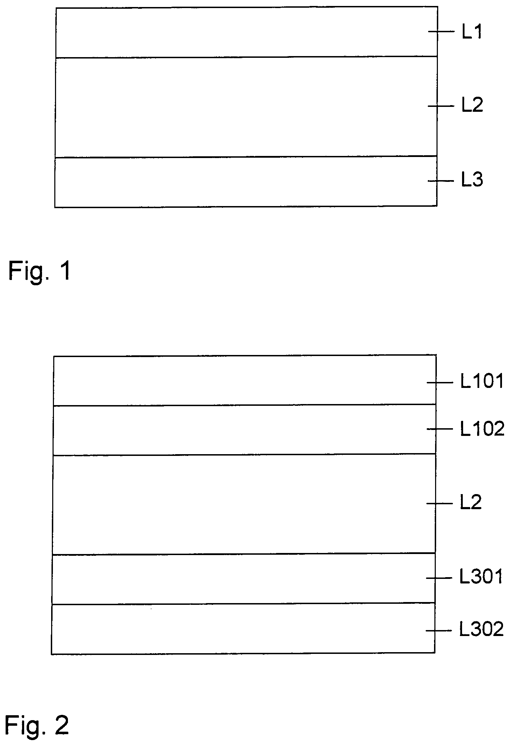

Fig. 1 zeigt eine erste Ausführungsform eines Folienverbundwerkstoffs, der mit dem erfindungsgemäßen Coextrusionsprozess erhalten wurde. Der Werkstoff umfasst eine obere äußere Schicht L1, eine einzelne mittlere Schicht L2 und eine untere äußere Schicht L3. Die mittlere Schicht L2 besteht aus dem eingangs erwähnten Kunststoff aus thermoplastischem Elastomer, wobei insbesondere ein thermoplastisches Elastomer auf Urethanbasis (im Folgenden auch mit der gängigen Abkürzung TPU bezeichnet) verwendet wird. TPU steht dabei jedoch stellvertretend auch für andere aufgrund ihrer mit TPU vergleichbaren physikalischen Eigenschaften für die mittlere Schicht L2 in Betracht kommende thermoplastische Elastomere, die sich hinsichtlich Erweichungstemperatur und Viskosität deutlich von dem Kunststoff der äußeren Schichten L1, L3 unterscheiden. Die für die mittlere Schicht L2 eingesetzten thermoplastischen Elastomere werden nachfolgend zusammengefaßt auch als TPE/TPU bezeichnet.

Demgegenüber sind die äußeren Schichten L1 bzw. L3 aus einem Kunststoff ohne thermoplastisches Elastomer gebildet, wobei dieser Kunststoff derart ausgestaltet ist, dass er bei Verwendung in einem späteren Prozess zur Herstellung eines Kartenkörpers für tragbare Datenträger auch bei höheren Temperaturen laminierfähig ist und eine höhere Steifigkeit als das Material der Schicht L2 aufweist. Darüber hinaus sollte der Werkstoff zur besseren Verarbeitung nicht blockend sein. Vorzugsweise wird als Material für die Schichten L1 bzw. L3 ein Polyester bzw. Copolyester verwendet. Besonders bevorzugt wird Polycarbonat (im Folgenden auch als PC bezeichnet) eingesetzt, oder Polyethylenterephthalat-Copolyester (im Folgenden auch mit der gängigen Abkürzung PETG bezeichnet) oder ein Blend aus Polycarbonat und einem oder mehreren anderen Polyestern (im Folgenden auch als PEC bezeichnet).

Vorzugsweise bestehen die Schichten L1 und L3 aus dem gleichen Material. Es besteht gegebenenfalls jedoch auch die Möglichkeit, dass sich die Materialien der Schicht L1 und der Schicht L2 durch Additive voneinander unterscheiden, beispielsweise kann die Schicht L1 transparent sein, wohingegen die Schicht L3 durch den Zusatz von Additiven nicht mehr transparent ist und z.B. weiß gefärbt ist. Die Gesamtdicke des Schichtaufbaus der Fig.1 liegt vorzugsweise zwischen 50 µm und 350 µm, insbesondere zwischen 100 µm und 300 µm. Die bevorzugte Dicke der mittleren Schicht L2 liegt zwischen 20 µm und 100 µm, vorzugsweise zwischen 30 µm bis 60 µm.

Fig. 2 zeigt eine zweite Ausführungsform einer Folienstruktur, die mit dem erfindungsgemäßen Verfahren erhalten wurde. Die Folienstruktur umfasst wiederum eine einzelne mittlere Schicht L2 aus thermoplastischem Elastomer, insbesondere aus TPU. Im Unterschied zur Ausführungsform der Fig. 1 sind auf beiden Seiten der mittleren Schicht L2 jeweils zwei äußere Schichten L101 und L102 bzw. L301 und L302 vorgesehen. Diese Schichten bestehen wiederum aus einem Material ohne thermoplastisches Elastomer, insbesondere aus PETG oder PC oder PEC. Alle Schichten L101, L102, L301 und L302 können aus dem gleichen Kunststoff oder aus unterschiedlichen Kunststoffen, gegebenenfalls mit verschiedenen Additiven, bestehen. Die Gesamtdicke der Folienstruktur der Fig. 2 liegt vorzugsweise zwischen 60 µm und 350 µm, insbesondere zwischen 100 µm bis 300 µm. Die bevorzugte Dicke der Schicht L2 liegt bei 20 µm bis 100 µm, insbesondere zwischen 30 µm und 60 µm.

In einer bevorzugten Ausführungsform ist der Typ des für die Schicht L2 verwendeten TPE/TPU-Kunststoffs in der Folienstruktur der Fig. 1 bzw. Fig. 2 von dem Polymertyp der außen liegenden Schichten im Folienverbund abhängig. So ist es günstiger, bei der Verwendung von temperaturstabileren Materialien, wie z.B. PC, für die äußeren Schichten auch härtere und temperaturstabilere TPE/TPU-Typen für die mittlere Schicht zu verwenden. Bei äußeren Schichten aus PETG ist es zu bevorzugen, einen TPE/TPU-Kunststoff mit einer Shore-Härte von Shore A 50 bis 95 bzw. Shore D 35 bis 50 zu verwenden, wobei die Massetemperatur beim Coextruieren vorzugsweise bei ca. 200 °C liegen sollte. Bei der Verwendung von PC als Material der äußeren Schichten ist es zu bevorzugen, dass für die mittlere Schicht ein TPE/TPU-Kunststoff mit einer Shore-Härte von Shore A 90 bzw. 98 bzw. Shore D 50 bis 70 verwendet wird, wobei beim Coextruieren die Massetemperatur vorzugsweise bei 235 °C liegen sollte.

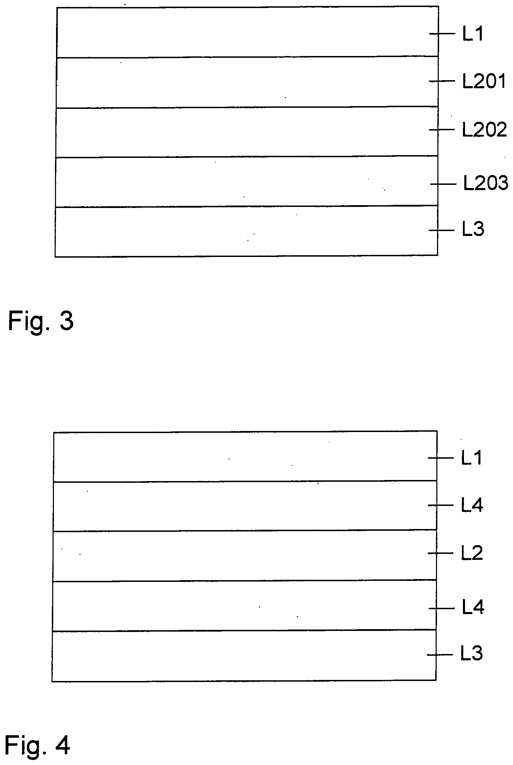

In den vorangegangenen Ausführungsformen wurden reine TPU/TPE-Kunststoffe oder Mischungen dieser Kunststoffe für die mittlere Schicht L2 verwendet. Um den Coextrusionsprozess zu verbessern, werden in einer weiteren Ausführungsform anstatt einer reinen TPE/TPU-Schicht eine Kunststoffmischung mit lediglich einem vorbestimmten Anteil an TPU als mittlere Schicht bzw. als mittlere Schichten verwendet. Eine solche Ausführungsform eines Schichtaufbaus ist in Fig. 3 gezeigt. In dieser Folienstruktur bestehen die äußeren Schichten L1 und L3 aus PETG, eventuell mit antiblockierenden Additiven bzw. Additiven, welche die Schicht laserbar einstellen. Anstatt einer mittleren Schicht L2 umfasst der Schichtaufbau der Fig. 3 nunmehr drei mittlere Schichten L201, L202 und L203. Wie bereits oben erwähnt, sind die für diese Schichten verwendeten Materialien keine reinen TPE/TPU-Kunststoffe mehr, sondern Kunststoffmischungen mit einem Anteil von TPU. In einer besonders bevorzugten Variante handelt es sich bei der Schicht L201 um eine PETG-Schicht mit ca. 15% bis 35% TPU-Anteil. Die Schicht L202 ist ebenfalls eine PETG-Schicht mit ca. 50% bis 75% Anteil an TPU. Auch für die Schicht L203 wird ein PETG-Kunststoff verwendet, der analog zur Schicht L201 wiederum einen Anteil von ca. 15% bis 35% an TPU aufweist.

Fig. 4 zeigt eine weitere Variante eines Schichtaufbaus, der eine gute Verbindung zwischen dem für die mittlere Schicht verwendeten TPU-Kunststoff mit den Kunststoffen der äußeren Schichten über einen Extrusions-Kleber gewährleistet. Die Ausführungsform der Fig. 4 umfasst eine einzelne mittlere Schicht L2 aus reinem TPU-Kunststoff sowie zwei äußere Schichten L1 und L3, welche aus PETG bestehen, eventuell wiederum mit antiblockierenden Zusätzen bzw. Zusätzen, welche die Laserfähigkeit des Materials gewährleisten. Zur Verbindung der TPU-Schicht L2 mit den äußeren Schichten L1 und L3 wird im Rahmen des Coextrusionsprozesses ein geeigneter Extrusionskleber verwendet, der als Zwischenschicht L4 zwischen den Schichten L1 und L2 bzw. den Schichten L2 und L3 eingebracht wird.

Der Folienverbundwerkstoff, der mit entsprechenden Verfahren gemäß den vorangegangenen Ausführungsformen hergestellt wurde, wird im Rahmen der Fertigung eines Kartenkörpers für einen tragbaren Datenträger, insbesondere einer Chipkarte, eingesetzt. Durch die Verwendung von thermoelastischem Elastomer wird dabei eine hohe Flexibilität und Reißfestigkeit des Kartenkörpers erreicht, wobei ferner durch die Integration des TPE/TPU-Materials in einem Verbundwerkstoff mit äußeren laminierfähigen und steiferen Materialien eine sehr gute Verarbeitbarkeit des Werkstoffs im Rahmen eines Laminierprozesses gewährleistet wird.

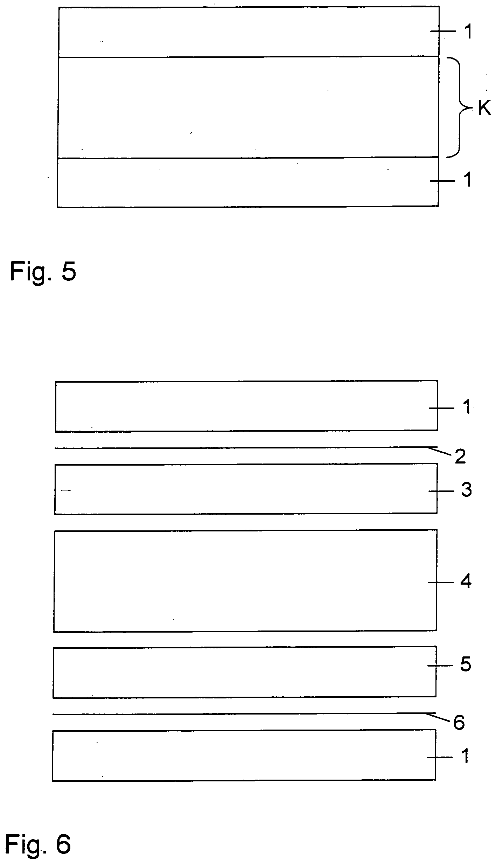

Fig. 5 zeigt schematisch eine bevorzugte Ausführungsform eines Kartenkörpers, in dem im Rahmen eines Laminierprozesses ein im Vorangegangenen beschriebener Folienverbundwerkstoff eingebracht wurde. In Fig. 5 sind dabei Schichten aus Folienverbundwerkstoff mit dem Bezugszeichen 1 bezeichnet. Dabei sind in dem Kartenkörper zwei Schichten aus Folienverbundwerkstoff als Overlay-Schichten auf dem eigentlichen Kartenkern K aufgebracht. Der Kartenkern K kann aus einer bis sieben Folien bestehen und setzt sich aus Standardmaterialien zusammen, welche herkömmlicherweise in Kartenkörpern für Datenträger eingesetzt werden. Diese Materialien umfassen insbesondere PVC, ABS, Polyester, Polycarbonat, PEC und dergleichen. Die Dicke der jeweiligen Schichten 1 liegt dabei in den bereits oben erwähnten Bereichen zwischen 50 µm und 350 µm, insbesondere zwischen 100 µm und 300 µm bzw. 100 µm und 200 µm. Demgegenüber liegt die Dicke des Kartenkerns K zwischen 100 µm und 700 µm, insbesondere zwischen 200 µm und 600 µm.

Der Kartenkörper der Fig. 5 wird in einem geeigneten Laminierprozess hergestellt. Je nach verwendetem Material für die äußeren Schichten 1 erfolgt das Laminieren bei Temperaturen zwischen 120 °C und 200 °C, bevorzugt bei 125 °C bis 190 °C und besonders bevorzugt bei 130 °C bis 180°C. Der Laminierprozess wird dabei vorzugsweise in einer Heizstation und in einer Kühlstation durchgeführt, wobei die in diesen Stationen angewendeten Drucke in Bereichen liegen, die bereits weiter oben definiert wurden. Die Laminierzeit bei einer 10-Lagen-Laminierung liegt sowohl in der Kühl- als auch in der Heizstation vorzugsweise zwischen 13 min und 25 min.

Fig. 6 zeigt nochmals eine spezielle Ausführungsform eines bevorzugten Schichtaufbaus eines Kartenkörpers gemäß einer Ausführungsform der Erfindung. In Analogie zu Fig. 5 werden wiederum für die äußeren Overlay-Schichten 1 die erfindungsgemäßen Folienverbundwerkstoffe umfassend TPE/TPU-Kunststoff eingesetzt. Zwischen den beiden Overlay-Schichten 1 liegt ein Schichtaufbau aus einer Farbschicht 2, welche gegebenenfalls weggelassen werden kann, einer dünnen Schicht 3 aus Thermoplast-Folie, einer dickeren Schicht 4 aus Thermoplast-Folie sowie wiederum einer dünnen Schicht 5 aus Thermoplast-Folie. An diese Schicht 5 schließt sich eine weitere Farbschicht 6 an, die analog zur Farbschicht 2 auch weggelassen werden kann. Der Aufbau wird dann durch die untere Overlay-Folie 1 abgeschlossen.

Die im Vorangegangenen beschriebenen Ausführungsformen der Erfindung weisen eine Reihe von Vorteilen auf. Bei der Herstellung eines Kartenkörpers wird eine gute Verarbeitbarkeit von hochelastischem TPU-Kunststoff durch Integration in einen coextrudierten Folienverbundwerkstoff gewährleistet. Insbesondere werden durch die äußeren Schichten des Folienverbundwerkstoffs eine ausreichende Laminierfähigkeit und Steifigkeit gewährleistet.

Durch die Verwendung des coextrudierten Folienverbundwerkstoffs werden die mechanischen Eigenschaften des Kartenkörpers verbessert. Dabei reicht es meistens schon aus, die beiden außen liegenden Overlay-Folien gegen den coextrudierten Folienverbundwerkstoff auszutauschen, wie dies in Fig. 5 und Fig. 6 gezeigt ist. Hierdurch wird erreicht, dass der herkömmliche restliche Aufbau des Kartenkörpers beibehalten werden kann. Somit kann auf einfache Weise durch geringe Abwandlungen eines herkömmlichen Herstellungsprozesses ein Kartenkörper mit verbesserten mechanischen Eigenschaften geschaffen werden.

## Patentansprüche

1. Verfahren zur Herstellung eines Folienverbundwerkstoffs (1) zur Verwendung als Schicht in einem Kartenkörper, vorzugsweise in einem Kartenkörper eines tragbaren Datenträgers, wobei in einem Coextrusionsprozess zumindest eine erste Kunststoffschmelze aus Kunststoff umfassend thermoplastisches Elastomer und zumindest eine zweite Kunststoffschmelze aus Kunststoff ohne thermoplastisches Elastomer derart zusammengeführt werden, dass ein Folienverbundwerkstoff (1) gebildet wird, beinhaltend eine oder mehrere äußere erste Schichten (L1, L101, L102) aus Kunststoff ohne thermoplastisches Elastomer, eine oder mehrere mittlere zweite Schichten (L2, L201, L202, L203) aus Kunststoff umfassend ein thermoplastisches Elastomer auf Urethanbasis und eine oder mehrere äußere dritte Schichten (L3, L301, L302) aus Kunststoff ohne thermoplastisches Elastomer, **dadurch gekennzeichnet, dass**
ein Folienverbundwerkstoff (1) gebildet wird, dessen eine oder mehrere erste und/oder dritte Schichten (L1, L101, L102, L3, L301, L302) jeweils Polycarbonat, Polyester, Copolyester, insbesondere Polyethylenterephthalat-Copolyester, eine Mischung von Polyestern oder eine Mischung von Polycarbonat mit einem oder mehreren Polyestern umfassen.

2. Verfahren nach Anspruch 1, **dadurch gekennzeichnet, dass** die eine oder mehreren zweiten Schichten (L2, L201, L202, L203) Polyethylenterephthalat-Copolyester mit einem Anteil an thermoplastischem Elastomer auf Urethanbasis umfassen, insbesondere mit einem Anteil von 15% bis 35% oder von 50% bis 75%.

3. Verfahren nach einem der vorhergehenden Ansprüche, **dadurch gekennzeichnet, dass** ein Folienverbundwerkstoff (1) gebildet wird, dessen eine oder mehrere zweite Schichten (L2, L201, L202, L203) eine Shore A-Härte von 90 oder größer und eine Shore D-Härte von 50 oder größer oder dessen eine oder mehrere zweite Schichten (L2, L201, L202, L203) eine Shore A-Härte von 95 oder kleiner und eine Shore D-Härte von 50 oder kleiner aufweisen.

4. Verfahren nach einem der vorhergehenden Ansprüche, **dadurch gekennzeichnet, dass** das Coextrusionsverfahren bei einer Massetemperatur von 200 °C oder höher, insbesondere bei 230 °C oder höher, durchgeführt wird.

5. Verfahren zur Herstellung eines Kartenkörpers, insbesondere für einen tragbaren Datenträger, indem eine Vielzahl von Schichten (1, 2, ..., 6) aus Kunststoff miteinander laminiert wird, **dadurch gekennzeichnet, dass** zumindest eine der Schichten (1, 2, ..., 6) aus Kunststoff ein nach einem Verfahren nach einem der Ansprüche 1 bis 5 hergestellter Folienverbundwerkstoff (1) ist.

6. Verfahren nach Anspruch 5, **dadurch gekennzeichnet, dass** das Laminieren bei einer Temperatur von zwischen 120°C und 200°C erfolgt, insbesondere zwischen 125°C und 190°C, vorzugsweise zwischen 130°C und 180°C, besonders bevorzugt zwischen 130°C und 140°C oder zwischen 175°C und 185°C, wobei der Druck beim Laminieren vorzugsweise zwischen 10 und 60 bar liegt, insbesondere bei 50 bar.

7. Verfahren nach Anspruch 5 oder 6, **dadurch gekennzeichnet, dass** beim Laminieren der Schichten (1, 2, ..., 6) zumindest eine der Deckschichten und insbesondere beide Deckschichten aus dem Folienverbundwerkstoff (1) bestehen.

## Claims

1. A method for manufacturing a foil composite material (1) for use as a layer in a card body, preferably in a card body of a portable data carrier, wherein
in a coextrusion process at least one first plastic melt of plastic comprising thermoplastic elastomer and at least one second plastic melt of plastic without thermoplastic elastomer are so joined that a foil composite material (1) is formed, containing one or several outer first layers (L1, L101, L102) of plastic without thermoplastic elastomer, one or several middle second layers (L2, L201, L202, L203) of plastic comprising a thermoplastic elastomer on urethane basis and one or several outer third layers (L3, L301, L302) of plastic without thermoplastic elastomer, **characterized in that**
a foil composite material (1) is formed, whose one or several first and/or third layers (L1, L101, L102, L3, L301, L302) respectively comprise polycarbonate, polyester, copolyester, in particular polyethylene terephthalate copolyester, a mixture of polyesters or a mixture of polycarbonate with one or several polyesters.

2. The method according to claim 1, **characterized in that** the one or several second layers (L2, L201, L202, L203) comprise polyethylene terephthalate copolyester with a content of thermoplastic elastomer on urethane basis, in particular with a content of 15% to 35% or of 50% to 75%.

3. The method according to any of the preceding claims, **characterized in that** a foil composite material (1) is formed, whose one or several second layers (L2, L201, L202, L203) have a Shore A hardness of 90 or higher and a Shore D hardness of 50 or higher, or whose one or several second layers (L2, L201, L202, L203) have a Shore A hardness of 95 or lower and a Shore D hardness of 50 or lower.

4. The method according to any of the preceding claims, **characterized in that** the coextrusion process is carried out at a mass temperature of 200 °C or higher, in particular at 230°C or higher.

5. A method for manufacturing a card body, in particular for a portable data carrier, by mutually laminating a multiplicity of layers (1, 2,..., 6) of plastic, **characterized in that** at least one of the layers (1, 2,..., 6) of plastic is a foil composite material (1) manufactured according to a method according to any of the claims 1 to 5.

6. The method according to claim 5, **characterized in that** the laminating takes place at a temperature of between 120°C and 200 °C, in particular between 125°C and 190 °C, preferably between 130 °C and 180°C, particularly preferably between 130 °C and 140°C or between 175 °C and 185 °C, wherein the pressure during lamination preferably lies between 10 and 60 bar, in particular lies at 50 bar.

7. The method according to claim 5 or 6, **characterized in that** upon laminating the layers (1, 2, ...., 6) at least one of the cover layers and in particular both cover layers consist of the foil composite material (1).

## Revendications

1. Procédé de fabrication d'un matériau composite en feuille (1) destiné à être utilisé comme couche dans un corps de carte, de préférence dans un corps de carte d'un support de données portable, cependant que
dans un processus de coextrusion, au moins une première masse de matière plastique fondue en matière plastique comprenant de l'élastomère thermoplastique et au moins une deuxième masse de matière plastique fondue en matière plastique sans élastomère thermoplastique sont accolées de telle manière qu'un matériau composite en feuille (1) est constitué, comportant une ou plusieurs premières couches extérieures (L1, L101, L102) en matière plastique sans élastomère thermoplastique, une ou plusieurs deuxièmes couches médianes (L2, L201, L202, L203) en matière plastique comprenant un élastomère thermoplastique à base d'uréthane, et une ou plusieurs troisièmes couches extérieures (L3, L301, L302) en matière plastique sans élastomère thermoplastique, **caractérisé en ce que**
un matériau composite en feuille (1) est constitué, dont une ou plusieurs premières et/ou troisièmes couches (L1, L101, L102, L3, L301, L302) comprennent respectivement du polycarbonate, du polyester, du copolyester, en particulier du copolyester de polyéthylène téréphtalate, un mélange de polyesters ou un mélange de polycarbonate avec un ou plusieurs polyesters.

2. Procédé selon la revendication 1, **caractérisé en ce que** la une ou les plusieurs deuxièmes couches (L2, L201, L202, L203) comprennent du copolyester de polyéthylène téréphtalate ayant une part d'élastomère thermoplastique à base d'uréthane, cette part étant en particulier de 15 % à 35% ou de 50% à 75%.

3. Procédé selon une des revendications précédentes, **caractérisé en ce qu'**un matériau composite en feuille (1) est constitué, dont une ou plusieurs deuxièmes couches (L2, L201, L202, L203) présentent une dureté shore A de 90 ou davantage et une dureté shore D de 50 ou davantage et dont l'une ou les plusieurs deuxièmes couches (L2, L201, L202, L203) présentent une dureté shore A de 95 ou moins et une dureté shore D de 50 ou moins.

4. Procédé selon une des revendications précédentes, **caractérisé en ce que** le processus de coextrusion est effectué à une température de la masse s'élevant à 200° ou davantage, en particulier à 230° ou davantage.

5. Procédé de fabrication d'un corps de carte, en particulier pour un support de données portable, qui a lieu en ce qu'une pluralité de couches (1, 2, .., 6) en matière plastique sont laminées ensemble, **caractérisé en ce qu'**au moins une des couches (1, 2, .., 6) en matière plastique est un matériau composite en feuille (1) fabriqué suivant un procédé selon une des revendications de 1 à 5.

6. Procédé selon la revendication 5, **caractérisé en ce que** le laminage a lieu à une température située entre 120°C et 200°C, en particulier entre 125°C et 190°C, de préférence entre 130°C et 180°C, particulièrement de préférence entre 130°C et 140°C ou entre 175°C et 185°C, la pression lors du laminage étant de préférence située entre 10 et 60 bar, en particulier étant de 50 bar.

7. Procédé selon la revendication 5 ou 6, **caractérisé en ce que**, lors du laminage des couches (1, 2,.., 6), au moins une des couches de recouvrement et en particulier les deux couches de recouvrement consistent en le matériau composite en feuille (1).
